**Europäisches Patentamt**

**European Patent Office**

**Office européen des brevets**

(19)

(11) Veröffentlichungsnummer : **0 158 622 B2**

(12)

# NEUE EUROPÄISCHE PATENTSCHRIFT

(45) Veröffentlichungstag der neuen Patentschrift :
24.06.92 Patentblatt 92/26

(51) Int. Cl.$^5$ : **F16F 1/28, B60G 11/12**

(21) Anmeldenummer : **85890052.5**

(22) Anmeldetag : **01.03.85**

(54) **Kunststoff-Blattfeder mit zumindest einem Federaugenkörper oder Federaugenbereich.**

(30) Priorität : **02.03.84 AT 711/84**

(43) Veröffentlichungstag der Anmeldung :
**16.10.85 Patentblatt 85/42**

(45) Bekanntmachung des Hinweises auf die
Patenterteilung :
**15.06.88 Patentblatt 88/24**

(45) Bekanntmachung des Hinweises auf die
Entscheidung über den Einspruch :
**24.06.92 Patentblatt 92/26**

(84) Benannte Vertragsstaaten :
**AT BE CH DE FR GB IT LI NL SE**

(56) Entgegenhaltungen :
**EP-A- 0 132 074
US-A- 3 362 253**

(56) Entgegenhaltungen :
**US-A- 3 370 483
US-A- 3 411 379
PATENT ABSTRACTS OF JAPAN, Band 8, Nr. 2
(M-266)(1439), 7. Januar 1984**

(73) Patentinhaber : **ISOSPORT
VERBUNDBAUTEILE Ges.m.b.H.
Industriestrasse 2
A-7000 Eisenstadt (AT)**

(72) Erfinder : **Woltron, Herbert
Babenbergerstrasse 7/12
A-2340 Mödling (AT)**
Erfinder : **Huber, Christian
Bahnstrasse 43/3c
A-7000 Eisenstadt (AT)**

(74) Vertreter : **Stampfer, Heinz
ISOVOLTA Österreichische Isolierstoffwerke
AG Industriezentrum NÖ-Süd
A-2351 Wiener Neudorf (AT)**

EP 0 158 622 B2

**Beschreibung**

Die Erfindung betriff eine Kunststoffblattfeder mit zumindest einem an einem der Federenden angeordneten, mit der Kunststoffblattfeder einstückig ausgebildeten Federaugenbereich aus faserverstärktem Kunststoff, der eine Schicht von im wesentlichen konstanter Dicke enthält, mit einem die Federaugenöffnung umschlingenden Mittelbereich (4) und zwei flächig miteinander verbundenen, im wesentlichen parallelen Anschlußbereichen (3), wobei letztere zumindest einen Teil des plattenförmigen Federendes bilden und wobei die äußere Oberfläche der Schicht (2) an zumindest einem Übergang zwischen ihrem Mittelbereich (4) und den Anschlußbereichen eine Hohlkehle bildet.

Eine Kunststoffblattfeder dieser Art ist aus der US-A-3 968 958 bekannt. Zum Herstellen dieser Federn geht man von einem dünnen Band aus, das aus ungewebtem Glasfasermaterial und einem ungehärteten Matrixharz auf Epoxydharzbasis besteht. Zuschnitte aus einem solchen Band werden in mehreren Lagen übereinander in eine Form eingelegt und unter Druck und bei erhöhter Temperatur unter Aushärtung des Matrixharzes zur fertigen Blattfeder verbunden. Die Figuren 6 und 15 dieser US-A-3 968 958 betreffen auf diese Weise hergestellte Kunststoffblattfedern bei denen die Federaugen im Federkörper mit integriert sind. So aufgebaute Kunststoffblattfedern haben nun in Richtung senkrecht zu den Flächen der zum Aufbau der Blattfeder dienenden Bandzuschnitte nur eine geringe Zugfestigkeit, da die Federn hier keine in dieser Richtung verlaufenden Verstärkungsfasern enthalten. Dies wirkt sich nun, wie die Anmelderin gefunden hat, in vielen Fällen so aus, daß die Blattfeder bei einer über die Federaugen eingeleiteten Überbelastung, die eine wesentliche Komponente auch in Richtung parallel zur Federnlängserstreckung aufweist, unmittelbar an einem Federauge in der Federmitte einreißt.

Hier will die Erfindung Abhilfe schaffen. Die Erfindung, wie sie in den Ansprüchen gekennzeichnet ist, löst die Aufgabe, eine Kunststoffeder der eingangs genannten Art bei sonst gleichbleibender Konstruktion und Dimensionierung so zu verbessern, daß durch Anbringen von Verstärkungselementen die durch einen Zugversuch bestimmte Festigkeit der Feder, bei der die über die Federaugen eingeleitete Zugkraft im wesentlichen in Federlängserstreckung wirkt, beträchtlich erhöht wird.

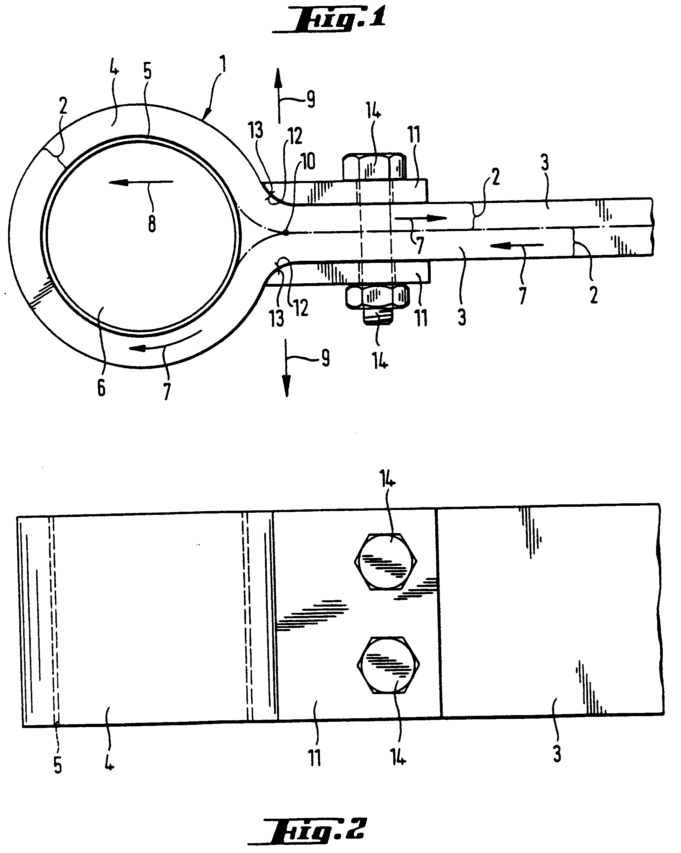

Im folgenden wird die Erfindung anhand der Zeichnungen, die die drei verschiedenen Ausführungswege darstellen, näher erläutert. Die Figuren 1 und 2 zeigen jeweils schematisch im Aufriß bzw. im Grundriß einen Federaugenbereich am Ende einer Blattfeder aus faserverstärktem Kunststoff.

Der in den Figuren 1 und 2 gezeigte Federaugenbereich 1 eines aus faserverstärktem Kunststoff. z. B. aus glasfaserverstärktem Epoxydharz, bestehenden Federkörpers weist eine Schicht 2 von im wesentlichen konstanter Dicke auf, mit zwei zueinander parallelen und miteinander verbundenen Anschlußbereichen 3 und einem Mittelbereich 4, der eine Federaugenbuchse 5 umschlingt. Die Federaugenbuchse 5, weiche ihrerseits vorteilhaft auch aus einem faserverstärkten Kunststoff oder auch aus Metall bestehen kann, umschließt die Federaugenöffnung 6. In der Schicht 2 verläuft der größte Teil der Verstärkungsfasern z. B. in Form von Faserrovings in Richtung der Pfeile 7, d. h. in Längserstreckung der Schicht 2.

Gemäß der Erfindung sind nun an dem Federaugenbereich 1 mechanische Verstärkungselemente angebracht, welche die Bruchlast der Blattfeder bei einer Zugbelastung in Richtung des Pfeiles 8 wesentlich erhöhen. Ohne solche Verstärkungselemente erfolgt der Bruch der Blattfeder im Federaugenbereich 1 nämlich gewöhnlich dadurch, daß bei einer solchen Zugbelastung an dem Übergang vom Mittelbereich 4 zu den beiden Anschlußbereichen 3 die letzteren in Richtung der Pfeile 9 auseinandergezogen werden, bis dann - bei der Bruchlast - der Federaugenbereich 1 an der Stelle 10 einreißt. Dem wird durch die erfindungsgemäß angebrachten Verstärkungselemente 11, entgegengewirkt.

Die Verstärkungselemente 11 bestehen aus Stahlplatten, die außen an den beiden Anschlußbereichen 3 der Schicht 2 anliegen, und weisen jeweils eine abgerundete Kante 12 auf, mit denen sie sich an die Hohlkehlen 13 am Übergang zwischen dem Mittelbereich 4 und den beiden Anschlußbereichen 3 der Schicht 2 anschmiegen. Die beiden platterförmigen Verstärkungselemente 11 sind mittels zweier Schraubenbolzen 14, die durch entsprechende, Bohrungen in den Verstarkungselementen 11 und den Federendbereich 1 hindurchreichen. miteinander und mit dem Federendbereich 1 verbunden. Durch das Anziehen der Schraubenbolzen 14 mit einem vorgegebenen Drehmoment werden die beiden Verstärkungselemente gegen die beiden Anschlußbereiche 3 die Schicht 2 und die beiden daran anschließenden Hohlkehlen 13 gedrückt. Dadurch wird der Federendbereich 1 an der Stelle 10. an der solche Blattfedern bei Zugversuchen meist zu brechen pflegen, in entscheidender Weise mechanisch unterstützt.

Bei einem konkret ausgeführten Federaugenkörper einer Breite von 60 mm und einer Dicke der Schicht 16 von 6 mm wurde ohne die beschriebenen Verstärkungselemente z. B. bei Zugbeanspruchung eine Bruchlast von 26 kN und mit diesen Verstärkungselementen eine Bruchlast von 80 kN gemessen.

Der Vorteil der erfindungsgemäßen Kunststoff-Blattfeder über bekannte Blattfedern dieser Art zeigt sich also besonders dann, wenn die über die Federaugen eingeleiteten Kräfte bzw. Spitzenbelastungen auch

EP 0 158 622 B2

wesentliche Komponenten in Richtung der Federlängserstreckung aufweisen können.

**Patentansprüche**

1. Kunststoffblattfeder mit zumindest einem an einem der Federenden angeordneten, mit der Kunststoffblattfeder einstückig ausgebildeten Federaugenbereich (1) aus faserverstärktem Kunststoff, der eine Schicht (2) von im wesentlichen konstanter Dicke enthält, mit einem die Federaugenöffnung umschlingenden Mittelbereich (4) und zwei flächig miteinander verbundenen, im wesentlichen parallelen Anschlußbereichen (3), wobei letztere zumindest einen Teil des plattenförmigen Federendes bilden und wobei die äußere Oberfläche der Schicht (2) an zumindest einem Übergang zwischen ihrem Mittelbereich (4) und den Anschlußbereichen (3) eine Hohlkehle (13) bildet, dadurch gekennzeichnet, daß zwei Verstärkungselemente (11) aus Stahl vorgesehen sind, welche einander gegenüberliegend an diesen Anschlußbereichen (3) unter Druck anliegen, wobei zumindest eines der Verstärkungselementen (11) die Schichtoberfläche auch an einer dieser Hohlkehlen (13) berührt und sich dabei an diese anschmiegt, und wobei Verstärkungselemente (11) durch Schraubenbolzen (14) miteinander und dem plattenförmigen Federende verbunden sind.

2. Kunststoffblattfeder nach Anspruch 1, dadurch gekennzeichnet, daß die Verstärkungselemente (11) aus Stahl plattenförmig ausgebildet sind.

3. Kunststoffblattfeder nach Anspruch 2, dadurch gekennzeichnet, daß sich zumindest eines der plattenförmigen Verstärkungselemente (11) aus Stahl mit einer abgerundeten Kante (12) an die anschließende Hohlkehle (13) anschmiegt.

**Claims**

1. Plastic leaf spring with at least one spring eye region (1) of fibre-reinforced plastic, arranged at one of the ends of the spring and constructed in one piece with the plastic leaf spring, which region contains a layer (2) of substantially constant thickness, with a central region (4) embracing the spring eye opening and two connection regions (3) substantially parallel and connected with each other in a laminar manner, in which the latter at least form a part of the plate-shaped end of the spring and in which the outer surface of the layer (2) forms a fillet (13) at at least one transition between its central region (4) and the connection regions (3), characterized in that two steel reinforcement elements (11) are provided, which, lying opposite each other, rest against these connection regions (3) under pressure, and in which at least one of the reinforcement elements (11) thereby touches the layer surface also on one of these fillets (13), and thereby fits closely thereon, and in which the reinforcement elements (11) are connected by screw bolts (14) with each other and with the plate-shaped spring end.

2. Plastic leaf spring according to Claim 1, characterized in that the reinforcement elements (11) are constructed in a plate shape from steel.

3. Plastic leaf spring according to Claim 2, characterized in that at least one of the plate-shaped steel reinforcement elements (11) with a rounded edge (12) fits closely against the adjoining fillet (11).

**Revendications**

1. Ressort à lames en matière plastique présentant au moins une zone formant un oeil de ressort (1), disposée à l'une des extrémités du ressort, monobloc avec le ressort à lames en matière plastique et réalisée en matière plastique renforcée par des fibres, ledit ressort comportant une couche (2) d'épaisseur sensiblement constante présentant une zone médiane (4) s'enroulant autour de l'ouverture (6) de l'oeil de ressort et deux zones de raccordement (3) planes, reliées l'une à l'autre et sensiblement parallèles, ces dernières constituant au moins une partie de l'extrémité du ressort et la surface extérieure de la couche (2) formant, sur au moins une transition entre sa zone médiane (4) et les zones de raccordement (3), un congé ou une gorge (13), caractérisé en ce qu'il est prévu deux éléments de renforcement (11) en acier qui s'appliquent l'un contre l'autre par pression contre ces zones de raccordement (3), au moins l'un des éléments de renforcement (11) venant également en contact avec la surface de la couche d'au moins l'un de ces congés (13) en épousant la forme de ces congés, et les éléments de renforcement (11) étant assemblés entre eux et aux extrémités de ressort en forme de plaque par des boulons filetés (14).

2. Ressort à lames en matière plastique selon la revendication 1, caractérisé en ce que les éléments de renforcement (11) en acier sont agencés en forme de plaques.

3

3. Ressort à lames en matière plastique selon la revendication 1 ou 2, caractérisé en ce qu'au moins l'un des éléments de renforcement (11) en acier et en forme de plaques vient épouser, par un bord arrondi (12), la forme du congé de raccordement (13).

## Fig.1

## Fig.2